# EUROPÄISCHE PATENTSCHRIFT

(11) **EP 3 472 909 B1**
(45) Veröffentlichungstag und Bekanntmachung des Hinweises auf die Patenterteilung: **14.12.2022**
(21) Anmeldenummer: 17735389.3
(22) Anmeldetag: 19.06.2017
(51) Int. Cl.: H02J 3/32, H02J 3/38

(54) **ENERGIEMANAGEMENTEINHEIT, ENERGIEVERSORGUNGSSYSTEM UND ENERGIEMANAGEMENTVERFAHREN**
ENERGY MANAGEMENT UNIT, ENERGY SUPPLY SYSTEM AND ENERGY MANAGEMENT METHOD
UNITÉ DE GESTION D'ÉNERGIE, SYSTÈME DE GESTION D'ÉNERGIE ET PROCÉDÉ DE GESTION D'ÉNERGIE

(30) Priorität: 21.06.2016 DE 102016007598
(43) Veröffentlichungstag der Anmeldung: 24.04.2019
(73) Patentinhaber: Karlsruher Institut für Technologie, 76131 Karlsruhe (DE)
(72) Erfinder: WOLLERSHEIM, Olaf, 76297 Stutensee (DE); GUTSCH, Andreas, 59348 Lüdinghausen (DE)
(74) Vertreter: Müller-Boré & Partner Patentanwälte PartG mbB
(86) Internationale Anmeldenummer: PCT/EP2017/000709
(87) Internationale Veröffentlichungsnummer: WO 2017/220198

(56) Entgegenhaltungen:
- WO-A2-2014/027246
- DE-A1-102013 111 608
- JP-A- 2012 016 261
- JP-A- 2014 073 052
- US-A1- 2005 006 958
- GAVRILUTA CATALIN ET AL: "Decentralized Primary Control of MTDC Networks With Energy Storage and Distributed Generation", IEEE TRANSACTIONS ON INDUSTRY APPLICATIONS, IEEE SERVICE CENTER, PISCATAWAY, NJ, US, Bd. 50, Nr. 6, 1. November 2014 (2014-11-01), Seiten 4122-4131, XP011564527, ISSN: 0093-9994, DOI: 10.1109/TIA.2014.2315715 [gefunden am 2014-11-18]

## Beschreibung

Die Erfindung betrifft eine Energiemanagementeinheit zur Steuerung und/oder Regelung einer Energiebereitstellung in einem AC-Energieverbrauchsnetz unter Zuhilfenahme eines Energiespeichers in Abhängigkeit eines Energiebedarfszustands des AC-Energieverbrauchsnetzes, wobei das AC-Energieverbrauchsnetz über einen Wechselrichter mit einem DC-Energieerzeugungsnetz verbunden ist, ein entsprechendes Energieversorgungssystem und ein entsprechendes Energiemanagementverfahren.

Die Nutzung regenerativer Energiequellen zur Energiegewinnung bekommt in Anbetracht von sich verknappenden fossilen Brennstoffen, z.B. Öl und Kohle, und der Gefahren atomarer Energiegewinnung eine immer größere Bedeutung.

Die Erzeugung elektrischer Energie durch Energiewandler, z.B. Photovoltaik-und/oder Windkraftanlagen, und die Einspeisung der erzeugten elektrischen Energie in Energieverbrauchs- und/oder Energieversorgungsnetze sind bekannt. Jedoch ist die Energieerzeugung durch die Energiewandler variabel. Insbesondere kann durch eine schwankende Sonneneinstrahlung und/oder eine schwankende Windstärke die Energieerzeugung aus Photovoltaik- und/oder Windkraftanlagen starken Schwankungen unterliegen.

Dadurch können Situationen entstehen, in denen die durch die Energiewandler erzeugte elektrische Energie den Bedarf an elektrischer Energie in dem Energieverbrauchs- und/oder Energieversorgungsnetz überschreitet oder unterschreitet. Mit anderen Worten, die Energiewandler erzeugen mehr oder weniger elektrische Energie als in dem Energieverbrauchs- und/oder Energieversorgungsnetz durch Verbraucher benötigt wird.

Daher ist es wünschenswert, überschüssige elektrische Energie, d.h. die durch die Energiewandler erzeugte Energie, welche den benötigten Energiebedarf der Verbraucher überschreitet (überschüssige elektrische Energie) zu speichern und in Situationen, in denen die durch die Energiewandler erzeugte elektrische Energie den Energiebedarf der Verbraucher unterschreitet, die gespeicherte Energie abzurufen und dem Energieverbrauchs- und/oder Energieversorgungsnetz, insbesondere den Verbrauchern, bereitzustellen.

So ist bekannt, einen Wechselrichter bereitzustellen, welcher ein DC-Energieerzeugungsnetz (d.h. ein Gleichstrom- bzw. Gleichspannungsenergieerzeugungsnetz), in welchem ein Energiewandler elektrische Energie erzeugt und dem Wechselrichter zuführt, mit einem AC-Energieverbrauchs- und/oder Energieversorgungsnetz, in welchem eine Wechselspannungs- und/oder Wechselstromcharakteristik vorherrscht, elektrisch verbindet. Über ein an dem Wechselrichter angeordneten DC-Zwischenkreis kann elektrische Energie bei einer konstanten DC-Spannungslage in einem Energiespeicher, z.B. ein Batteriesystem, gespeichert und aus dem Energiespeicher entnommen werden. Insbesondere können in Stromflussrichtung vor einem AC-seitigen Ausgang des Wechselrichters ein bidirektionaler DC/DC-Wandler oder zwei parallel geschaltete unidirektionale DC/DC-Wandler ausgebildet sein, welche elektrische Energie für das Laden bzw. Entladen des Energiespeichers ab- bzw. zuführen. Des Weiteren steuert und/oder regelt eine Steuerungs- und/oder Regelungseinheit den Wechselrichter beim Laden oder Entladen des Energiespeichers, um ungünstige Strom und/oder Spannungskonstellationen auf der DC-Seite des Wechselrichters bzw. im DC-Energieerzeugungsnetz zu verhindern.

Ferner ist aus der JP 2014 073052 A ein Energiespeichersystem bekannt, welches eine Energiespeichervorrichtung, die eine Last LS mit Energie versorgt; Öffnungs- / Schließmittel, mit denen die Energiespeichervorrichtung in einen mit einem Energieempfangsteil verbundenen oder getrennten Zustand versetzt wird; und ein Inversstromfluss-Erfassungsmittel, das mit bidirektionalen Leistungserfassungsmitteln in Reihe geschaltet ist und einen inversen Stromfluss erfasst aufweist.

Die US 2005/0006958 A1 betrifft ein netzgekoppeltes Stromversorgungssystem, umfassend eine primäre Stromquelle, eine Notstromquelle, einen DC/AC-Wechselrichter und einen DC/DC-Wandler. Gleichstrom von der primären Stromquelle wird dem DC/AC-Wechselrichter zugeführt, um einen Wechselstromausgang zu erhalten, der einem Versorgungsnetz zugeführt wird, wenn Strom aus dem Versorgungsnetz zur Stromversorgung einer Last verfügbar ist. Der Ausgang des Wechselrichters wird einem ausgewählten Teil der Last zugeführt, wenn der Last kein Strom aus dem Versorgungsnetz zur Verfügung steht. Gleichstrom von der Notstromquelle wird dem Wechselrichter über einen DC/DC-Wandler zugeführt, wenn der Last kein Strom aus dem Versorgungsnetz zur Verfügung steht. Der DC/DC-Wandler wandelt die Spannung des Gleichstroms von der Notstromquelle in Gleichstrom mit einer Spannung um, die mit der Spannung der Primärstromquelle und des Wechselrichters kompatibel ist. Die Notstromquelle kann von der Primärstromquelle oder vom Versorgungsnetz aufgeladen werden. Verfahren zum Bereitstellen von Notstrom umfassen das Umwandeln der Gleichstromspannung von einer Notstromquelle in Gleichstrom der umgewandelten Spannung und das Zuführen des Gleichstroms der umgewandelten Spannung zu einem DC/AC-Wechselrichter.

Die DE 10 2013 111 608 A1 betrifft ein System mit einem Photovoltaik-Wechselrichter, der Gleichstromeingänge umfasst, die mit Photovoltaik-Teilgeneratoren eines Photovoltaik-Generators verbunden sind, und einen Wechselstromausgang, der mit einer Stromversorgung verbunden ist. Eine Speicherbatterie, z.B. Lithium-Ionen-Batterie, speichert elektrische Energie und eine Ladevorrichtung ist für die Batterie vorgesehen. Die Batterie ist mit einem der Eingänge verbunden, wobei eine Eingangsseite des Ladegeräts mit dem Ausgang verbunden ist. Ein Steuergerät steuert den Ladevorgang des Akkus.

Es ist Aufgabe der vorliegenden Erfindung, die Nutzung von Energiespeichern in Kombination mit Energiewandlern zu vereinfachen.

Diese Aufgabe wird durch die Merkmale der unabhängigen Ansprüche gelöst. Bevorzugte Ausführungsformen sind in den abhängigen Ansprüchen definiert.

Ein Aspekt betrifft eine Energiemanagementeinheit zur Steuerung und/oder Regelung einer Energiebereitstellung in einem AC-Energieverbrauchsnetz unter Zuhilfenahme eines Energiespeichers in Abhängigkeit eines Energiebedarfszustands des AC-Energieverbrauchsnetzes, wobei das AC-Energieverbrauchsnetz über einen ersten Netzwandler, der ein Wechselrichter ist, mit einem ein Photovoltaik-Modul aufweisendem DC-Energieerzeugungsnetz verbunden ist.

Im Sinne der vorliegenden Offenbarung bedeutet die Abkürzung "AC" Wechselstrom und/oder Wechselspannung und die Abkürzung "DC" bedeutet Gleichstrom und/oder Gleichspannung. Demzufolge weist das AC-Energieverbrauchsnetz eine Wechselstrom- und/oder Wechselspannungscharakteristik auf, insbesondere kann der Wechselstrom und/oder die Wechselspannung einphasig oder dreiphasig ausgebildet sein. Des Weiteren weist das DC-Energieerzeugungsnetz eine Gleichstrom- und/oder Gleichspannungscharakteristik auf.

Das AC-Energieverbrauchsnetz kann mit einem AC-seitigen Ausgang des Wechselrichters verbunden sein, insbesondere elektrisch verbunden sein. Des Weiteren kann im AC-Energieverbrauchsnetz ein Netzanschlusspunkt ausgebildet sein, wobei das AC-Energieverbrauchsnetz über den Netzanschlusspunkt mit einem Energieversorgungsnetz, insbesondere mit einem Energieversorgungsnetz eines Energieunternehmens, elektrisch verbunden ist. Zwischen dem AC-seitigen Ausgang des Wechselrichters und dem Netzanschlusspunkt kann zumindest ein elektrischer Verbraucher, z.B. eine Waschmaschine oder ein Geschirrspüler, angeordnet sein, der mit dem AC-Energieverbrauchsnetz elektrisch verbunden ist.

Das mit dem AC-Energieverbrauchsnetz über den ersten Netzwandler, der als Wechselrichter ausgebildet ist, gekoppelte DC-Energieerzeugungsnetz kann dazu ausgestaltet sein, Energie aus regenerativen Energiequellen, wie z.B. Sonne, Wind, Wasser, in elektrische Energie zu transformieren bzw. umzuwandeln. Insbesondere kann in dem DC-Energieerzeugungsnetz eine Photovoltaikanlage und/oder eine Mehrzahl von Photovoltaik-Modulen, welche zu einer Photovoltaikanlage zusammengeschaltet (Parallelschaltung oder Serienschaltung) sein können, über eine elektrische Verbindung, insbesondere eine String-Verbindung, mit einem DC-seitigen Eingang des Wechselrichters elektrisch verbunden sein. Der Wechselrichter kann insbesondere eine Mehrzahl von DC-seitigen Eingängen aufweisen, wobei jeder DC-seitige Eingang über eine String-Verbindung mit einem Energiewandler, insbesondere einer Photovoltaikanlage, verbunden sein kann.

Der Wechselrichter ist dazu ausgelegt, eine am DC-seitigen Eingang anliegende Gleichspannung und/oder einen anliegenden Gleichstrom umzuwandeln und am AC-seitigen Ausgang eine mit dem AC-Energieverbrauchsnetz kompatible Wechselspannung und/oder einen kompatiblen Wechselstrom auszugeben.

Die Energiemanagementeinheit umfasst weiter einen zweiten Netzwandler, der als (erster) DC/DC-Wandler ausgebildet ist, zum Zuführen einer aus dem Energiespeicher entnommenen Energie zu dem DC-Energieerzeugungsnetz. Insbesondere kann der zweite Netzwandler unidirektional ausgebildet sein und zwar derart, ein an einem Eingang des zweiten Netzwandlers anliegendes Energieniveau (z.B. ein Gleichspannungs- und/oder Gleichstromniveau) in ein an einem Ausgang des zweiten Netzwandlers definiertes Energieniveau (z.B. ein höheres oder niedrigeres oder invertiertes Gleichspannungs- und /oder Gleichstromniveau) zu transformieren bzw. umzuwandeln.

Die Energiemanagementeinheit umfasst weiter einen dritten Netzwandler, der als AC/DC-Wandler ausgebildet ist, zum Speichern von einer aus dem AC-Energieverbrauchsnetz entnommenen Energie in dem Energiespeicher.

Insbesondere kann der dritte Netzwandler unidirektional ausgebildet sein und zwar derart, eine an einem Eingang des dritten Netzwandlers anliegende Energiecharakteristik (z.B. eine Wechselspannung und/oder ein Wechselstrom) in ein an einem Ausgang des dritten Netzwandlers definierte Energiecharakteristik (z.B. eine Gleichspannung und /oder einen Gleichstrom) zu transformieren bzw. umzuwandeln. Der Eingang des dritten Netzwandlers kann als AC-seitiger Eingang bezeichnet werden und der Ausgang des dritten Netzwandlers kann als DC-seitiger Ausgang bezeichnet werden.

Die Energiemanagementeinheit umfasst weiter eine Steuerungs- und/oder Regeleinheit, welche dazu ausgelegt ist:
- den Energiebedarfszustand des AC-Energieverbrauchsnetzes zu ermitteln; und
- den zweiten Netzwandler (DC/DC-Wandler) und den dritten Netzwandler (AC/DC-Wandler) in Abhängigkeit des ermittelten Energiebedarfszustands zu steuern und/oder zu regeln.

Als Energiebedarfszustand kann eine elektrische Bilanz des AC-Energieverbrauchsnetzes angesehen werden. Insbesondere kann als Energiebedarfszustand das Verhältnis zwischen der durch das DC-Energieerzeugungsnetz bereitgestellten Energie und die durch das AC-Energieverbrauchsnetz, insbesondere durch den zumindest einen Verbraucher, entnommene Energie angesehen werden.

Insbesondere für den Fall, dass das DC-Energieerzeugungsnetz mehr Energie erzeugt als durch den zumindest einen Verbraucher im AC-Energieverbrauchsnetz verbraucht wird, d.h. dass überschüssige Energie im AC-Energieverbrauchsnetz vorhanden ist, steuert und/oder regelt die Steuerungs- und Regeleinheit den dritten Netzwandler, insbesondere den AC/DC-Wandler derart, dass die überschüssige elektrische Energie des AC-Energieverbrauchsnetz dem Energiespeicher zugeführt wird, wobei die zugeführte elektrische Energie in dem Energiespeicher gespeichert wird. Der dritte Netzwandler ist insbesondere derart ausgestaltet, die überschüssige elektrische Energie des AC-Energieverbrauchsnetzes über den Eingang des dritten Netzwandlers zu entnehmen und die entnommene Energie über den Ausgang des dritten Netzwandlers dem Energiespeicher zuzuführen.

Für den Fall, dass der Energiebedarf des zumindest einen Verbrauchers größer ist als die durch den Energiewandler im DC-Energieerzeugungsnetz bereitgestellte Energie, d.h. es herrscht ein Energiedefizit, kann die Steuerungs- und/oder Regeleinheit den zweiten Netzwandler (insbesondere den ersten DC/DC-Wandler) derart steuern und/oder regeln, elektrische Energie aus dem Energiespeicher zu entnehmen und dem DC-Energieerzeugungsnetz zuzuführen.

Der zweite Netzwandler bzw. der (erste) DC/DC-Wandler ist insbesondere derart ausgestaltet, die im Energiespeicher gespeicherte Energie über den Eingang des zweiten Netzwandlers zu entnehmen und über den Ausgang des zweiten Netzwandlers dem DC-Energieerzeugungsnetz zuzuführen, insbesondere einem Anschlusspunkt, welcher zwischen dem Energiewandler und dem Wechselrichter (erster Netzwandler) angeordnet ist.

Der (erste) DC/DC-Wandler ist dazu ausgebildet, eine Strom-/Spannungscharakteristik des Photovoltaik-Moduls aufzuweisen.

Wechselrichter an denen ein Photovoltaik-Modul und/oder eine Photovoltaikanlage zur Energieeinspeisung betrieben werden, nutzen das sogenannte Maximum Power Point Tracking (MPPT) Regelungs- und/oder Steuerungsverfahren. Beim MPPT - Regelungs- und/oder Steuerungsverfahren wird die elektrische Belastung des Photovoltaik-Moduls und/oder der Photovoltaikanlage derart angepasst, dass dem Photovoltaik-Modul und/oder der Photovoltaikanlage die größte mögliche Leistung entnommen werden kann (optimaler Betriebspunkt). Bei Photovoltaik-Modulen und/oder Photovoltaik-Anlagen ist dieser optimale Betriebspunkt nicht konstant, sondern hängt unter anderem von der Bestrahlungsstärke und/oder Temperatur des Photovoltaik-Moduls bzw. der Photovoltaikanlage und von dem Typ (z.B. Siliziumbasiert) des Photovoltaik-Moduls bzw. der Photovoltaik-Anlage ab.

Die vorgeschlagene Ausgestaltung des (ersten) DC/DC-Wandlers ist vorteilhaft, da während des Betriebs des (ersten) DC/DC-Wandlers, d.h. Zuführen von Energie in das DC-Energieerzeugungsnetz, das MPPT - Regelungs- und/oder Steuerungsverfahren des Wechselrichters nicht ungünstig beeinflusst wird und der Wechselrichter auch beispielsweise nachts, wenn keine Energie erzeugt wird, weiterläuft.

Insbesondere ist der (erste) DC/DC-Wandler in Bezug auf eine Zielleistungszufuhr nach dem Zusammenhang von transportiertem Strom als Funktion der Spannung gemäß einer Strom/Spannungscharakteristik des Photovoltaik-Moduls, das insbesondere auf Silizium basierend ist, ausgebildet.

Des Weiteren erkennt dadurch das MPPT - Regelungs- und/oder Steuerungsverfahren des Wechselrichters keinen Unterschied zwischen der durch den Energiewandler bereit gestellten Energie und der durch den (ersten) DC/DC-Wandler zugeführten Energie. Eine gesonderte Steuerung und/oder Regelung des Wechselrichters in Verbindung mit einem Energiemanagementsystem zum Laden und Entladen eines Energiespeichers kann daher entfallen.

Die vorgeschlagene Lösung ist besonders vorteilhaft, da die Steuerung und/oder Regelung der Entnahme und/oder des Speicherns von Energie keine (aufwendige bzw. zusätzliche) Steuerung und/oder Regelung des Wechselrichters bedarf. Beim Erweitern von Energieerzeugungssystemen, welche zum Beispiel eine mit einem Wechselrichter gekoppelte Photovoltaikanlage umfassen, mit einem Energiespeicher, ist somit keine Modifikation des bereits installierten Wechselrichters nötig. Das heißt, der bereits installierte Wechselrichter kann ohne weitere Modifikation weiterverwendet werden. Insbesondere kann zu jedem Zeitpunkt (abgesehen von Verlusten innerhalb des Energieerzeugungsnetzes) die gesamte, vom Energiewandler (z.B. Photovoltaik-Modul) bereitgestellte elektrische Energie in den ersten Netzwandler (Wechselrichter) zur Übertragung in das AC-Energieverbrauchsnetz eingespeist werden, insbesondere selbst dann, wenn die elektrische Energie im Verbrauchsnetz nicht unmittelbar benötigt wird. Insbesondere erfolgt keine direkte Übertragung (DC/DC) aus dem DC-Energieerzeugungsnetz an den Speicher. Stattdessen erfolgt diese Übertragung über den ersten Netzwandler (Wechselrichter), das AC-Energieverbrauchsnetz und den dritten Netzwandler (AC/DC-Wandler).

Des Weiteren kann durch die vorgeschlagene Lösung auf eine mögliche Anbindung eines bidirektionalen AC/DC-Lade-/Entladeregler zum Laden und Entladen des Energiespeichers, welcher an einem AC-seitigen Ausgang des Wechselrichters angeordnet ist, verzichtet werden. In herkömmlichen Systemen müsste ein solcher bidirektionaler AC/DC-Lade-/Entladeregler sämtliche Netzanschlussbedingungen für alle Versorgungsnetze erfüllen, an die der bidirektionalen AC/DC-Lade-/Entladeregler angeschlossen werden soll. Insbesondere im Einspeisebetrieb ist diese Anforderung wegen der von den Netzbetreibern geforderten hohen Qualität der sinusförmigen Wechselspannung und der hohen Anforderungen an die elektromagnetische Verträglichkeit nicht einfach zu erfüllen. Somit ermöglicht die vorgeschlagene Lösung eine einfache Integration eines Energiespeichers.

Somit kann die vorgeschlagene Energiemanagementeinheit mit jedem beliebigen Wechselrichter zur Einspeisung elektrischer Energie in ein AC-Energieverbrauchsnetz verwendet werden. Das heißt, für die Einspeisung der aus erneuerbaren Energiequellen gewonnenen Energie werden keine speziellen Geräte für die DC/AC-Wandlung (Wechselrichter) benötigt und die Einspeisung der elektrischen Energie in ein AC-Energieverbrauchsnetz kann auf einer Gerätetechnik beruhen, die über viele Jahrzehnte bereits erfolgreich betrieben wurde.

Vorzugsweise kann die Steuerungs- und/oder Regeleinheit den (ersten) DC/DC-Wandler derart steuern und/oder regeln, dass der (erste) DC/DC-Wandler Energie aus dem Energiespeicher entnimmt und dem DC-Energieerzeugungsnetz zuführt, wobei parallel eine Einspeisung von Energie durch den Energiewandler erfolgt.

Somit wird ein Mischbetrieb ermöglicht, bei dem die von dem Wechselrichter gewandelte Energie zu einem Teil aus der von dem Energiewandler erzeugten Energie und zu einem anderen Teil aus der durch den (ersten) DC/DC-Wandler unter Zuhilfenahme des Energiespeichers zugeführten Energie bestehen kann.

Insbesondere kann die Steuerungs- und/oder Regeleinheit den AC/DC-Wandler in einem ersten Zustand derart steuern und/oder regeln, dass der AC/DC-Wandler elektrische Energie aus dem AC-Energieverbrauchsnetz entnimmt und dem elektrischen Energiespeicher zuführt. In einem zweiten Zustand kann die Steuerungs- und/oder Regeleinheit den AC/DC-Wandler derart steuern und/oder regeln, dass der AC/DC-Wandler keine elektrische Energie aus dem AC-Energieverbrauchsnetz entnimmt.

Vorzugsweise umfasst die Energiemanagementeinheit ein Sensorelement, welches dazu ausgelegt ist, den Energiebedarfszustand im AC-Energieverbrauchsnetz, insbesondere eine elektrische Leistungsbilanz, zu erfassen.

Dazu kann das Sensorelement mit dem AC-Energieverbrauchsnetz verbindbar ausgebildet sein. Insbesondere kann das Sensorelement zwischen dem Netzanschlusspunkt und dem zumindest einen Verbraucher angeordnet sein, d.h. zwischen dem Netzanschlusspunkt und dem Sensorelement ist kein Verbraucher angeordnet. Des Weiteren kann der Eingang des AC/DC-Wandlers mit einem Anschlusspunkt, welcher zwischen dem Sensorelement und dem Netzanschluss angeordnet ist, verbindbar bzw. verbunden sein.

Insbesondere kann das Sensorelement dazu ausgelegt sein, einen Strom und/oder eine Spannung und/oder eine Frequenz einer elektrischen Leistung im AC-Energieverbrauchsnetz zu erfassen. Somit ist es möglich durch das Sensorelement den Energiebedarfszustand bzw. die elektrische Leistungsbilanz im AC-Energieverbrauchsnetz zu ermitteln. Insbesondere kann das Sensorelement und/oder die Steuerungs- und/oder Regeleinheit dazu ausgelegt sein, zu ermitteln, ob der Energiebedarfszustand einem Zustand überschüssiger Energie, eines Energiedefizits oder eines Energiegleichgewichts entspricht. Ein Energiegleichgewicht kann vorliegen, wenn die durch den Energiewandler und die in das AC-Energieverbrauchsnetz eingespeiste Energie dem Energiebedarf des zumindest einen Verbrauchers entspricht.

Ein weiterer Aspekt betrifft ein Energieversorgungssystem umfassend zumindest ein erstes DC-Energieerzeugungsnetz, welches ein Photovoltaik-Modul aufweist.

Das erste DC-Energieerzeugungsnetz kann insbesondere ein Gleichspannungsnetz und/oder ein Gleichstromnetz sein, welches vorzugsweise zumindest einen ersten Energiewandler aufweist. Der zumindest eine (erste) Energiewandler kann dazu ausgebildet sein, Energie aus regenerativen Energiequellen, wie z.B. Sonne, Wind, Wasser, in elektrische Energie umzuwandeln. Der zumindest eine Energiewandler kann zum Beispiel als Photovoltaik-Zelle und/oder Photovoltaik-Modul und/oder Photovoltaikanlage und/oder Windkraftanlage ausgebildet sein. Insbesondere können mehrere Photovoltaik-Module mittels einer Serien- und/oder Parallelschaltung zu einer Photovoltaikanlage zusammengeschaltet ausgebildet sein.

Das Energieversorgungssystem umfasst weiter einen ersten Netzwandler, der als (erster) Wechselrichter ausgebildet ist, der dazu ausgelegt ist, das erste DC-Energieerzeugungsnetz mit einem AC-Energieverbrauchsnetz zu koppeln.

Insbesondere ist der (erste) Wechselrichter dazu ausgelegt, eine an einem DC-seitigen Eingang anliegende Gleichspannung und/oder einen anliegenden Gleichstrom umzuwandeln und an einem AC-seitigen Ausgang des (ersten) Wechselrichters eine mit dem AC-Energieverbrauchsnetz kompatible Wechselspannung und/oder einen kompatiblen Wechselstrom auszugeben. Des Weiteren kann der (erste) Wechselrichter mit dem zumindest einen Energiewandler elektrisch verbunden sein.

Des Weiteren kann das AC-Energieverbrauchsnetz mit dem AC-seitigen Ausgang des (ersten) Wechselrichters verbunden sein, insbesondere elektrisch verbunden sein. Des Weiteren kann im AC-Energieverbrauchsnetz ein Netzanschlusspunkt ausgebildet sein, wobei das AC-Energieverbrauchsnetz über den Netzanschlusspunkt mit einem Energieversorgungsnetz, insbesondere mit einem Energieversorgungsnetz eines Energierunternehmens, elektrisch verbunden ist. Zwischen dem AC-seitigen Ausgang des Wechselrichters kann zumindest ein elektrischer Verbrauch, z.B. eine Waschmaschine oder ein Geschirrspüler, angeordnet sein, der mit dem AC-Energieverbrauchsnetz elektrisch verbunden ist.

Das Energieversorgungssystem umfasst weiter eine Energiemanagementeinheit gemäß dem oben beschriebenen ersten Aspekt der vorliegenden Erfindung, vorzugsweise in einer der in diese Beschreibung gezeigten Ausführungsformen. Die Energiemanagementeinheit umfasst einen zweiten Netzwandler, insbesondere zumindest einen ersten DC/DC-Wandler, zum Zuführen einer aus einem Energiespeicher entnommenen Energie zu dem DC-Energieerzeugungsnetz. Insbesondere kann der erste DC/DC-Wandler unidirektional ausgebildet sein und zwar derart, ein an einem Eingang des ersten DC/DC-Wandlers anliegendes Energieniveau (z.B. ein Gleichspannungs- und/oder Gleichstromniveau) in ein an einem Ausgang des ersten DC/DC-Wandlers definiertes Energieniveau (z.B. ein höheres oder niedrigeres oder invertiertes Gleichspannungs- und/oder Gleichstromniveau) zu transformieren.

Die Energiemanagementeinheit umfasst weiter einen dritten Netzwandler, insbesondere einen AC/DC-Wandler, zum Speichern von einer aus dem AC-Energieverbrauchsnetz entnommenen Energie in dem Energiespeicher. Insbesondere kann der AC/DC-Wandler unidirektional ausgebildet sein und zwar derart, eine an einem Eingang des dritten Netzwandlers anliegende Energiecharakteristik (z.B. eine Wechselspannung und/oder ein Wechselstrom) in eine an einem Ausgang des dritten Netzwandlers definierte Energiecharakteristik (z.B. eine Gleichspannung und /oder einen Gleichstrom) umzuwandeln. Der Eingang des AC/DC-Wandlers kann als AC-seitiger Eingang bezeichnet werden und der Ausgang des dritten Netzwandlers kann als DC-seitiger Ausgang bezeichnet werden, wobei der AC-seitige Eingang mit dem AC-Energieverbrauchsnetz elektrisch verbunden ist und der DC-seitige Ausgang mit dem Energiespeicher elektrisch verbunden ist.

Die Energiemanagementeinheit umfasst weiter eine Steuerungs- und/oder Regeleinheit, welche dazu ausgelegt ist:
- den Energiebedarfszustand des AC-Energieverbrauchsnetzes zu ermitteln; und
- den zweiten Netzwandler (ersten DC/DC-Wandler) und den dritten Netzwandler (AC/DC-Wandler) in Abhängigkeit des ermittelten Energiebedarfszustands zu steuern und/oder zu regeln.

Die vorgeschlagene Lösung ist aus den oben bereits genannten Gründen besonders vorteilhaft.

Vorzugsweise kann der erste DC/DC Wandler an einem zwischen dem (ersten) Energiewandler und dem (ersten) Wechselrichter angeordnetem Anschluss eingekoppelt sein, wobei zwischen dem Energiewandler und dem Anschluss ein (erstes) Sperrelement angeordnet sein kann.

Insbesondere kann das (erste) Sperrelement zum (ersten) Energiewandler hin in Sperrrichtung geschaltet sein. Auf diese Weise kann verhindert werden, dass die von dem (ersten) DC/DC-Wandler eingespeiste elektrische Energie zu einer Fehlfunktion des (ersten) Energiewandlers und/oder des Energieversorgungssystems führen kann, indem dadurch etwa die Ausgangsspannung des (ersten) Energiewandlers erhöht wird.

Vorzugsweise kann das Energieversorgungssystem weiter umfassen:
- ein zweites DC-Energieerzeugungsnetz, wobei die Energiemanagementeinheit optional weiter umfasst:
- einen zweiten DC/DC-Wandler zum Zuführen einer aus dem Energiespeicher entnommenen Energie zu dem zweiten DC-Energieerzeugungsnetz, wobei die Steuerungs- und/oder Regeleinheit dazu ausgelegt ist, den zweiten DC/DC-Wandler in Abhängigkeit des ermittelten Energiebedarfszustands zu steuern und/oder zu regeln.

Insbesondere kann das zweite DC-Energieerzeugungsnetz mit dem (ersten) Wechselrichter gekoppelt sein (DC-seitig gekoppelt sein). Alternativ kann das zweite DC-Energieerzeugungsnetz über einen zweiten Wechselrichter mit dem AC-Energieverbrauchsnetz elektrisch gekoppelt sein. Durch die vorgeschlagene Lösung lässt sich das erfindungsgemäße Energieversorgungssystem bedarfsgerecht kaskadieren bzw. erweitern. Das heißt, es können weitere Energiewandler über einen weiteren Wechselrichter oder über den bereits vorhandenen Wechselrichter entsprechend zugeschaltet und/oder ergänzt werden. Durch die optionale Anordnung des zweiten DC/DC-Wandlers ist es möglich, Energie aus dem Energiespeicher zu entnehmen und zusätzlich dem zweiten DC-Energieerzeugungsnetz zuzuführen.

Vorzugsweise umfasst das Energieversorgungssystem den Energiespeicher. Insbesondere kann der Energiespeicher derart ausgestaltet sein, elektrische Energie aufzunehmen und in geeigneter Form, möglicherweise auch als mechanische oder chemische Energie, zu speichern sowie die gespeicherte Energie direkt als elektrische Energie abzugeben oder die gespeicherte Energieform wieder in elektrische Energie umzuwandeln und abzugeben. Vorzugsweise kann der Energiespeicher als ein wiederaufladbares Batteriesystem und/oder als eine Kondensatoreinheit und/oder als ein Schwungradspeicher ausgebildet sein. Somit können als Energiespeicher herkömmliche elektrische Speichersysteme benutzt werden.

Ein weiterer Aspekt betrifft ein Energiemanagementverfahren zur Steuerung und/oder Regelung einer Energiebereitstellung in einem AC-Energieverbrauchsnetz unter Zuhilfenahme eines Energiespeichers in Abhängigkeit eines Energiebedarfszustands des AC-Energieverbrauchsnetzes, wobei das AC-Energieverbrauchsnetz über einen ersten Netzwandler, der als (erster) Wechselrichter ausgebildet ist, mit einem ein Photovoltaik-Modul aufweisenden (ersten) DC-Energieerzeugungsnetz verbunden ist und der Wechselrichter ein Maximum Power Point Tracking (MPPT) Regelungs- und/oder Steuerungsverfahren nutzt, wobei ein DC/DC-Wandler zum Zuführen einer aus dem Energiespeicher entnommenen Energie zu dem DC-Energieerzeugungsnetz vorgesehen ist, wobei der DC/DC-Wandler an einem zwischen dem Photovoltaik-Modul und dem Wechselrichter angeordnetem Anschluss eingekoppelt ist, wobei das Verfahren umfasst:
- Ermitteln eines Energiebedarfszustands in dem AC-Energieverbrauchsnetz;
- in Abhängigkeit des ermittelten Energiebedarfszustands:
   - Entnehmen einer in einem Energiespeicher gespeicherten elektrischen Energie zur Zuführung der elektrischen Energie in das (erste) DC-Energieerzeugungsnetz mittels des DC/DC-Wandler (zweiter Netzwandler), wobei der DC/DC-Wandler dazu ausgebildet ist, eine Strom/Spannungscharakteristik des Photovoltaik-Moduls aufzuweisen, wobei der DC/DC-Wandler in Bezug auf eine Zielleistungszufuhr nach dem Zusammenhang von transportiertem Strom als Funktion der Spannung gemäß einer Strom/Spannungscharakteristik eines Photovoltaik-Moduls ausgebildet ist.

Als Alternative, die nicht beansprucht ist, kann das Verfahren aufweisen:
- Entnehmen einer in dem AC-Energieverbrauchsnetz überschüssigen elektrischen Energie zur Speicherung der überschüssigen Energie in dem Energiespeicher, insbesondere mittels eines in dieser Beschreibung ebenfalls ausgeführten dritten Netzwandlers (vorzugsweise in Form eines AC/DC-Wandlers).

Vorzugsweise sind die erfindungsgemäße Energiemanagementeinheit bzw. das erfindungsgemäße Energieversorgungssystem ausgelegt, ein erfindungsgemäßes Verfahren, insbesondere in einer der hier beschriebenen bevorzugten Ausführungsformen, auszuführen. Soweit einzelne Komponenten oder Funktionalitäten der Energiemanagementeinheit eines erfindungsgemäßen Energieversorgungssystem hier beschrieben sind, sind diese Ausführungen auch auf die erfindungsgemäße Energiemanagementeinheit in einer bevorzugten Ausführungsform anwendbar.

### Figurenbeschreibung

Nachfolgend wird eine bevorzugte Ausführungsform der Energiemanagementeinheit und/oder des Energieversorgungssystems anhand der beigefügten Zeichnung beispielhaft erläutert. Es zeigt:
- Figur 1:: eine schematische Darstellung einer Energiemanagementeinheit und eines Energieversorgungssystems; und
- Figur 2a und 2b:: ein Schaltungsanordnung eines AC/DC-Wandlers.

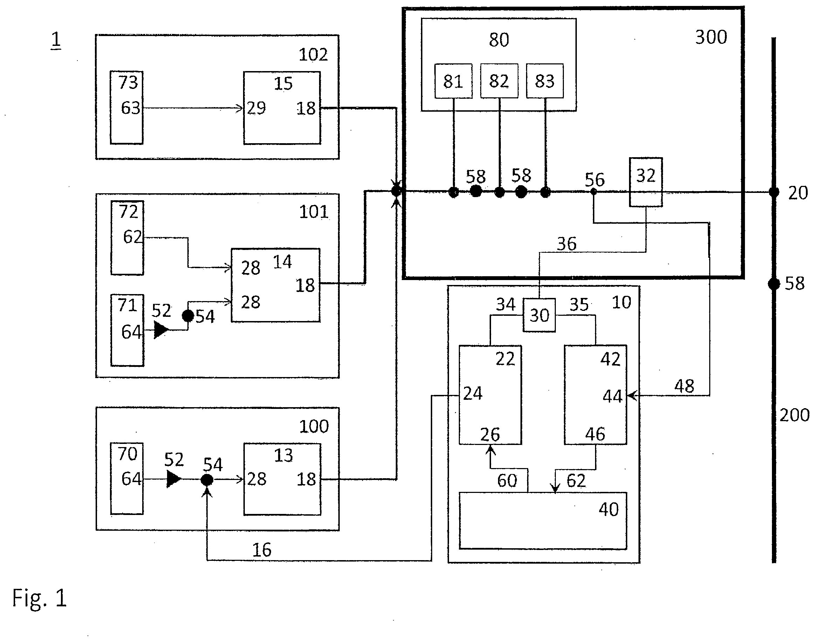

**Figur 1** zeigt eine von einem Energieversorgungssystem 1 umfasste Energiemanagementeinheit 10. Das Energieversorgungssystem 1 umfasst zumindest ein erstes Energieerzeugungsnetz 100, welches insbesondere als ein erstes DC-Energieerzeugungsnetz 100 ausgebildet sein kann, welches vorzugsweise zumindest einen ersten Energiewandler 70 aufweisen kann. Der erste Energiewandler 70 kann dazu ausgebildet sein, Energie aus regenerativen Energiequellen, wie z.B. Sonne, Wind, Wasser, in elektrische Energie umzuwandeln. Der erste Energiewandler 70 kann zum Beispiel als Photovoltaikzelle und/oder Photovoltaik-Modul und/oder Photovoltaikanlage und/oder Windkraftanlage ausgebildet sein. Insbesondere können mehrere Photovoltaik-Module mittels einer Serien- und/oder Parallelschaltung zu einer Photovoltaikanlage zusammengeschaltet ausgebildet sein und als erster Energiewandler 70 bereitgestellt werden.

Das Energieversorgungssystem 1 umfasst weiter einen ersten Wechselrichter 13, der dazu ausgelegt ist, das erste DC-Energieerzeugungsnetz 100 mit einem AC-Energieverbrauchsnetz 300 zu koppeln, insbesondere elektrisch zu koppeln.

Insbesondere ist der Wechselrichter 13 dazu ausgelegt, eine an einem DC-seitigen Eingang 28 anliegende Gleichspannung und/oder einen anliegenden Gleichstrom umzuwandeln und an einem AC-seitigen Ausgang 18 des ersten Wechselrichters 13 eine mit dem AC-Energieverbrauchsnetz 300 kompatible Wechselspannung und/oder einen kompatiblen Wechselstrom auszugeben. Des Weiteren kann der erste Wechselrichter 13 mit dem ersten Energiewandler 70 elektrisch verbunden sein.

Des Weiteren kann das AC-Energieverbrauchsnetz 300 mit dem AC-seitigen Ausgang 18 des ersten Wechselrichters 13 verbunden sein, insbesondere elektrisch verbunden sein. Des Weiteren kann im AC-Energieverbrauchsnetz 300 ein Netzanschlusspunkt 20 ausgebildet sein, wobei das AC-Energieverbrauchsnetz 300 über den Netzanschlusspunkt 20 mit einem Energieversorgungsnetz 200, insbesondere mit einem Energieversorgungsnetz eines Energierunternehmens, elektrisch verbunden ist. Zwischen dem AC-seitigen Ausgang 18 des ersten Wechselrichters 13 kann zumindest ein elektrischer Verbraucher 81, z.B. eine Waschmaschine oder ein Geschirrspüler, angeordnet sein, der mit dem AC-Energieverbrauchsnetz 300 elektrisch verbunden ist. Das AC-Energieverbrauchsnetz kann aber auch eine Gruppe aus elektrischen Verbrauchern 80 umfassen, die einzelne elektrische Verbraucher 81, 82 und 83 umfasst. Zum besseren Verständnis der im Folgenden verwendete Begriff Verbraucher 80 einen oder eine Mehrzahl von Verbrauchern umfassen.

Das Energieversorgungssystem 100 umfasst weiter die Energiemanagementeinheit 10. Die Energiemanagementeinheit 10 umfasst weiter zumindest einen ersten DC/DC-Wandler 22, zum Zuführen einer aus einem Energiespeicher 40 entnommenen Energie zu dem ersten DC-Energieerzeugungsnetz 100. Insbesondere kann der erste DC/DC-Wandler 22 unidirektional ausgebildet sein und zwar derart, ein an einem Eingang 26 des ersten DC/DC-Wandlers 22 anliegendes Energieniveau (z.B. ein Gleichspannungs- und/oder Gleichstromniveau) in ein an einem Ausgang 24 des ersten DC/DC-Wandlers 22 definiertes Energieniveau (z.B. ein höheres oder niedrigeres oder invertiertes Gleichspannungs- und/oder Gleichstromniveau) zu transformieren. Insbesondere kann der Eingang 26 des ersten DC/DC-Wandlers 22 mittels einer Leitung 60 mit dem Energiespeicher 40 elektrisch verbunden sein.

Die Energiemanagementeinheit 10 umfasst weiter einen AC/DC-Wandler 42, zum Speichern von einer aus dem AC-Energieverbrauchsnetz 300 entnommenen Energie in dem Energiespeicher 40. Insbesondere kann der AC/DC-Wandler 42 unidirektional ausgebildet sein und zwar derart, eine an einem Eingang 44 des AC/DC-Wandlers 42 anliegende Energiecharakteristik (z.B. eine Wechselspannung und/oder einen Wechselstrom) in eine an einem Ausgang 46 des AC/DC-Wandlers 42 definierte Energiecharakteristik (z.B. eine Gleichspannung und/oder einen Gleichstrom) umzuwandeln. Mit anderen Worten, der AC/DC-Wandler 42 ist derart ausgebildet, die Spannungs- und/oder Stromanpassung zwischen dem AC-Energieverbrauchsnetz 300 und dem Energiespeicher 40 vorzunehmen. Der Eingang 44 des AC/DC-Wandlers 42 kann als AC-seitiger Eingang 44 bezeichnet werden und der Ausgang 46 des AC/DC-Wandlers 42 kann als DC-seitiger Ausgang 46 bezeichnet werden, wobei der AC-seitige Eingang 44 mit dem AC-Energieverbrauchsnetz 300 elektrisch verbunden sein kann, insbesondere mit einem im AC-Energieverbrauchsnetz 300 und/oder in dem Energieversorgungsnetz 200 angeordnetem Entnahmeanschluss 56. Des Weiteren kann der DC-seitige Ausgang 46 über eine Leitung 62 mit dem Energiespeicher 40 elektrisch verbunden sein.

Insbesondere kann der AC/DC-Wandler 42 eine Vielzahl leistungstragender Anschlüsse aufweisen. Zum Beispiel kann der AC/DC-Wandler 42 eingangsseitig einen Anschluss für einen Neutralleiter, jeweils einen Anschluss für die drei Wechselspannungsphasen L 1, L2 und L3 des AC-Energieversorgungsnetzes 300 oder des Energieversorgungsnetzes 200 und ausgangsseitig einen Plus- und einen Minuspol aufweisen. Die leistungstragenden elektrischen Anschlüsse N, und L1-L3 können mit dem AC-Energieverbrauchsnetz 300 oder mit dem Energieversorgungsnetz 200 elektrisch verbunden sein. Des Weiteren können der leistungstragende Plus- und Minuspol mit dem Energiespeicher 40 verbunden sein.

Die Energiemanagementeinheit 10 umfasst weiter eine Steuerungs- und/oder Regeleinheit 30, welche dazu ausgelegt ist:
- den Energiebedarfszustand des AC-Energieverbrauchsnetzes 300 zu ermitteln; und
- den ersten DC/DC-Wandler 22 und den AC/DC-Wandler 42 in Abhängigkeit des ermittelten Energiebedarfszustands zu steuern und/oder zu regeln.

Als Energiebedarfszustand kann eine elektrische Bilanz des AC-Energieverbrauchsnetzes 300 angesehen werden. Insbesondere kann als Energiebedarfszustand das Verhältnis zwischen der durch das erste DC-Energieerzeugungsnetz 100 bereitgestellten Energie, insbesondere die durch den ersten Energiewandler 70 erzeugte Energie, und die durch das AC-Energieverbrauchsnetz 300, insbesondere durch die elektrischen Verbraucher 80, entnommene Energie angesehen werden.

Insbesondere für den Fall, dass das erste DC-Energieerzeugungsnetz 100 mehr Energie erzeugt als durch die Verbraucher 80 im AC-Energieverbrauchsnetz 300 verbraucht wird, d.h. dass überschüssige Energie im AC-Energieverbrauchsnetz 300 vorhanden ist, steuert und/oder regelt die Steuerungs- und Regeleinheit 30 den AC/DC-Wandler 42 derart, dass die überschüssige elektrische Energie des AC-Energieverbrauchsnetz 300 dem Energiespeicher 40 zugeführt wird, wobei der Energiespeicher 40 dazu ausgelegt ist, die zugeführte elektrische Energie zu speichern. Der AC/DC-Wandler 42 ist insbesondere derart ausgestaltet, die überschüssige elektrische Energie des AC-Energieverbrauchsnetzes 300 über den Eingang 44 des AC/DC-Wandlers 42 zu entnehmen und die entnommene Energie über den Ausgang 46 des AC/DC-Wandlers 42 dem Energiespeicher 40 zuzuführen.

Zum Steuern und/oder Regeln des AC/DC-Wandlers 42 kann die Steuerungs-und/oder Regeleinheit 30 mit dem AC/DC-Wandler 42, insbesondere über eine Kommunikationsleitung 35, kommunikativ verbunden sein. Des Weiteren kann zum Steuern und/oder Regeln des ersten DC/DC-Wandlers 22, die Steuerungs- und/oder Regeleinheit 30 zum mit dem ersten DC/DC-Wandler 22, insbesondere über eine Kommunikationsleitung 34, kommunikativ verbunden sein.

Für den Fall, dass der Energiebedarf der Verbraucher 80 größer ist als die durch das erste DC-Energieerzeugungsnetz 100 bereitgestellte Energie, d.h. es herrscht ein Energiedefizit, kann die Steuerungs- und/oder Regeleinheit 30 den ersten DC/DC Wandler 22 derart steuern und/oder regeln, elektrische Energie aus dem Energiespeicher 40 zu entnehmen und dem ersten DC-Energieerzeugungsnetz 100 zuzuführen.

Der erste DC/DC-Wandler 22 ist insbesondere derart ausgestaltet, die im Energiespeicher 40 gespeicherte Energie über den Eingang 26 des ersten DC/DC-Wandlers 22 zu entnehmen und über den Ausgang 24 des ersten DC/DC-Wandlers 22 dem ersten DC-Energieerzeugungsnetz 100 zuzuführen, insbesondere einem Anschlusspunkt 54, welcher an einer zwischen dem ersten Energiewandler 70 und dem Wechselrichter 13 angeordneten Verbindung, angeordnet ist.

Die vorgeschlagene Lösung ist besonders vorteilhaft, da die Steuerung und/oder Regelung der Entnahme und/oder des Speicherns von Energie keine Steuerung und/oder Regelung des ersten Wechselrichters 13 bedarf. Beim Erweitern von Energieerzeugungssystemen, welche zum Beispiel eine mit einem Wechselrichter gekoppelte Photovoltaikanlage umfassen, um einen Energiespeicher, ist somit keine Modifikation des bereits installierten Wechselrichters nötig. Das heißt, der bereits installierte Wechselrichter kann ohne weitere Modifikation weiterverwendet werden.

Der erste DC/DC-Wandler 13 ist dazu ausgebildet, eine Strom-/Spannungscharakteristik des ersten Energiewandlers 70, insbesondere eines Photovoltaik-Moduls und/oder einer Photovoltaikanlage, aufzuweisen.

In der in Fig. 1 dargestellten bevorzugten Ausführungsform ist die Steuerungs-und/oder Regeleinheit 30 ausgelegt, den ersten DC/DC-Wandler 22 derart steuern und/oder regeln, dass der erste DC/DC-Wandler 22 Energie aus dem Energiespeicher 40 entnimmt und dem DC-Energieerzeugungsnetz 100 zuführt, wobei parallel eine Einspeisung von Energie durch den ersten Energiewandler 70 erfolgt.

Somit wird ein Mischbetrieb unterstützt, bei dem die von dem ersten Wechselrichter 13 gewandelte Energie zu einem Teil aus der von dem ersten Energiewandler 70 erzeugten Energie und zu einem anderen Teil aus der durch den ersten DC/DC-Wandler 22 zugeführten Energie bestehen kann.

Vorzugsweise ist die Steuerungs- und/oder Regeleinheit 30 ausgelegt, den AC/DC-Wandler 42 in einem ersten Zustand, welcher insbesondere dem Fall entspricht, dass das erste DC-Energieerzeugungsnetz 100 bzw. der ersten Energiewandler mehr Energie erzeugt als durch die Verbraucher 80 im AC-Energieverbrauchsnetz 300 verbraucht wird (Energieüberschuss im AC-Energieverbrauchsnetz 300), derart steuern und/oder regeln, dass der AC/DC-Wandler 42 elektrische Energie aus dem AC-Energieverbrauchsnetz 300 entnimmt und dem elektrischen Energiespeicher 40 zuführt. In einem zweiten Zustand, welcher insbesondere dem Fall entspricht, dass der Energiebedarf der Verbraucher 80 größer ist als die durch das erste DC-Energieerzeugungsnetz 100 bzw. den ersten Energiewandler 70 bereitgestellte Energie (Energiedefizit im AC-Energieverbrauchsnetz 300), kann die Steuerungs-und/oder Regeleinheit 30 den AC/DC-Wandler 42 derart steuern und/oder regeln, dass der AC/DC-Wandler 42 keine elektrische Energie aus dem AC-Energieverbrauchsnetz 300 entnimmt.

Insbesondere um diese Fälle von Energieüberschuss oder Energiedefizit im AC-Energieverbrauchsnetz 300 erkennen und unterscheiden zu können umfasst das Energieversorgungssystem 1, insbesondere die Energiemanagementeinheit 10, vorzugsweise ein Sensorelement 32, welches dazu ausgelegt ist, den Energiebedarfszustand des AC-Energieverbrauchsnetzes 300 zu erfassen.

Dazu kann das Sensorelement 32 mit dem AC-Energieverbrauchsnetz 300 verbindbar ausgebildet sein. Das Sensorelement 32 ist insbesondere in Stromflussrichtung hinter dem ersten Wechselrichter 13, d.h. AC-seitig an dem ersten Wechselrichter 13, angeordnet, wobei zwischen dem ersten Wechselrichter 13 und dem Sensorelement 32 wenigstens ein Verbraucher 80, bevorzugt alle Verbraucher 80 angeordnet sind. Anders ausgedrückt, das Sensorelement 32 kann zwischen dem Netzanschlusspunkt 20 und einem dem Verbraucher 80 zugeordneten Verbraucheranschlusspunkt 58 vorgesehen sein. D.h. zwischen dem Netzanschlusspunkt 20 und dem Sensorelement 32 ist kein Verbraucher 80 angeordnet.

Des Weiteren kann der Eingang 44 des AC/DC-Wandlers 42 mit einem Entnahmeanschluss 56 verbunden sein, wobei der Entnahmeanschluss 56 zwischen dem Sensorelement 32 und dem AC-seitigen Ausgang 18 des ersten Wechselrichters 13 angeordnet sein kann.

Insbesondere kann das Sensorelement 32 dazu ausgelegt sein, einen Strom und/oder eine Spannung und/oder eine Frequenz einer elektrischen Leistung im AC-Energieverbrauchsnetz 300 zu erfassen. Insbesondere kann das Sensorelement 32 als Wechselstrom (AC)-Sensor ausgebildet sein. Des Weiteren kann das Sensorelement 32 derart ausgestaltet sein, in einem relevanten elektrischen Bilanzraum zwischen den Verbrauchern 80 des DC-Energieerzeugungsnetzes 100 und dem Netzanschluss 20 mit einer zeitlichen Auflösung wenigstens die relevanten AC-Netzdaten des AC-Energieverbrauchsnetzes 300 zu erfassen, wie z.B. Strom und/oder Spannung und/oder Frequenz der elektrischen Leistung und/oder Frequenz in jeder Wechselspannungs- und/oder Wechselstromphase. Die zeitliche Auflösung kann bevorzugt kleiner als 200 msec, insbesondere kleiner als 100 msec ausgestaltet sein. Die erfassten AC-Netzdaten können an einer in der Energiemanagementeinheit 10 angeordnete Steuerungs- und/oder Regeleinheit 30, insbesondere unter Zuhilfenahme der Kommunikationsleitung 36, übertragen werden. Die Auswertung der erfassten AC-Netzdaten durch die Steuerungs-und/oder Regeleinheit 30 ergibt den momentanen elektrischen Energiefluss in der vorgegebenen zeitlichen Auflösung und damit die elektrische Nettobilanz des DC-Energieerzeugungsnetzes 100. Die Steuerungs- und/oder Regeleinheit 30 ist damit in der Lage, den ersten DC/DC-Wandler 22 und den AC/DC-Wandler 42 nach der von dem Sensorelement 32 bestimmten elektrischen Bilanz zu steuern.

Anders ausgedrückt, das Sensorelement 32 ermöglicht die Ermittlung des Energiebedarfszustands bzw. der elektrischen Bilanz im AC-Energieverbrauchsnetz 300. Insbesondere kann das Sensorelement 32 und/oder die Steuerungs- und/oder Regeleinheit 30 dazu ausgelegt sein, zu ermitteln, ob der Energiebedarfszustand einem Zustand überschüssiger Energie, eines Energiedefizits oder eines Energiegleichgewichts entspricht. Insbesondere kann ein Fall überschüssiger Energie vorliegen, wenn das erste DC-Energieerzeugungsnetz 100 bzw. der erste Energiewandler mehr Energie erzeugt als durch den bzw. die Verbraucher 80 im verbraucht wird. Des Weiteren kann ein Fall eines Energiedefizits vorliegen, wenn der Energieverbrauch des bzw. der Verbraucher 80 größer ist als die durch das erste DC-Energieerzeugungsnetz 100 bzw. die durch den ersten Energiewandler 70 erzeugte Energie. Ein Energiegleichgewicht kann insbesondere vorliegen, wenn die durch den Energiewandler 70 und die in das AC-Energieverbrauchsnetz 300 eingespeiste Energie dem Energiebedarf des Verbrauchers 80 entspricht.

Vorzugsweise kann der erste DC/DC Wandler 22 an einem zwischen dem Energiewandler 70 und dem ersten Wechselrichter 13 angeordnetem Anschluss 54 eingekoppelt sein, wobei zwischen dem Energiewandler 70 und dem Anschluss 54 ein Sperrelement 52 angeordnet sein kann.

Insbesondere kann das Sperrelement 52 zum Energiewandler 70 hin in Sperrrichtung geschaltet sein. Auf diese Weise kann verhindert werden, dass die von dem ersten DC/DC-Wandler 22 eingespeiste elektrische Energie zu einer Fehlfunktion des Energiewandlers 70 und/oder des Energieversorgungssystems 1 führen kann, indem dadurch etwa die Ausgangsspannung des Energiewandlers 70 erhöht wird.

Vorzugsweise kann das Energieversorgungssystem 1 ein zweites Energieerzeugungsnetz 101, insbesondere ein DC-Energieerzeugungsnetz 101 umfassen. Das zweite Energieerzeugungsnetz 101 kann einen zweiten Energiewandler 71 und einen dritten Energiewandler 72 umfassen, welche funktionell dem ersten Energiewandler 70 entsprechen können.

Das zweite Energieerzeugungsnetz 101 kann einen zweiten Wechselrichter 14 umfassen, welcher funktionell dem ersten Wechselrichter 13 entsprechen kann. Der zweite Wechselrichter 14 weist einen AC-seitigen Ausgang 18 auf, welcher das zweite Energieerzeugungsnetz 101 mit dem AC-Energieverbrauchsnetz 300 koppelt. Des Weiteren weist der zweite Wechselrichter 14 zwei DC-seitige Eingänge 28 auf, welche jeweils mit einem Ausgang 64 des zweiten Energiewandler 71 bzw. einem Ausgang 62 des dritten Energiewandler 72 elektrisch verbunden sind. Wie für den ersten Energiewandler 70 vorgesehen, kann in einer Verbindung zwischen dem Energiewandler 71 und dem zweiten Wechselrichter 14 ein Sperrelement 52 und ein Anschluss 54 für die Verbindung des ersten DC/DC-Wandler 22 vorgesehen sein. Die Energiemanagementeinheit 10 kann allerdings auch einen zweiten DC/DC-Wandler umfassen, welcher mit dem Anschlusspunkt 54 des zweiten Energieerzeugungsnetzes 101 und dem Energiespeicher 40 verbunden ist. Die Steuerungs- und/oder Regeleinheit 30 kann insbesondere derart ausgelegt sein, den zweiten DC/DC-Wandler zu steuern und/oder zu regeln. Insbesondere kann die Steuer- und/oder Regelung des zweiten DC/DC-Wandlers der Steuer- und/oder Regelung des ersten DC/DC-Wandlers 22 entsprechen.

Insbesondere ist die Energiemanagementeinheit 10 derart ausgestaltet, den zweiten DC/DC-Wandler in Abhängigkeit des ermittelten Energiebedarfszustands zu steuern und/oder zu regeln.

Des Weiteren kann das Energieversorgungssystem 1 ein drittes Energieerzeugungsnetz 102 umfassen, welches mit dem AC-Energieverbrauchsnetz 300 über einen dritten Wechselrichter 15 gekoppelt ist. Das dritte Energieerzeugungsnetz 102 kann weiter einen vierten Energiewandler 73 aufweisen, welcher mit dem dritten Wechselrichter 15 elektrisch verbunden ist.

Das Energieversorgungssystem 1 kann insbesondere den Energiespeicher 40 umfassen. Insbesondere kann der Energiespeicher 40 derart ausgestaltet sein, elektrische Energie aufzunehmen und in geeigneter Form, möglicherweise auch als mechanische oder chemische Energie, zu speichern sowie die gespeicherte Energie direkt als elektrische Energie abzugeben oder die gespeicherte Energieform wieder in elektrische Energie umzuwandeln und abzugeben. Vorzugsweise kann der Energiespeicher 40 zum Beispiel ein wiederaufladbares Batteriesystem und/oder eine Kondensatoreinheit und/oder einen Schwungradspeicher aufweisen kann.

Die Steuerungs- und/oder Regelungseinheit 30 kann derart ausgestaltet sein, ein Energiemanagementverfahren zur Steuerung und/oder Regelung einer Energiebereitstellung in dem AC-Energieverbrauchsnetz 300 unter Zuhilfenahme des Energiespeichers 40 in Abhängigkeit eines Energiebedarfszustands des AC-Energieverbrauchsnetzes 300 durchzuführen.

Insbesondere kann die Steuerungs- und/oder Regelungseinheit 30 dazu ausgelegt sein, den Energiebedarfszustand in dem AC-Energieverbrauchsnetz 300, insbesondere die elektrische Nettobilanz des und/oder der (DC-) Energieerzeugungsnetze 100-102 zu ermitteln. Insbesondere kann die Steuerungs-und/oder Regeleinheit 30 unter Zuhilfenahme des Sensorelements 32 den Energiebedarfszustand und/oder die elektrische Nettobilanz erfassen.

Des Weiteren kann das Energiemanagementverfahren vorsehen, in Abhängigkeit des ermittelten Energiebedarfszustands, die in dem Energiespeicher 40 gespeicherte elektrischen Energie dem ersten DC-Energieerzeugungsnetz 100 oder mehreren DC-Energieerzeugungsnetzen 100/101 zuzuführen, oder die in dem AC-Energieverbrauchsnetz 300 überschüssige elektrische Energie, zur Speicherung der überschüssigen elektrischen Energie in dem Energiespeicher 40, zu entnehmen.

Insbesondere kann das Energiemanagementverfahren wenigstens einen der folgenden Betriebszustände aufweisen, welche vorzugsweise durch die Steuerungs-und/oder Regeleinheit 30 gesteuert und/oder geregelt sein können:
(i) Erzeugen elektrischer Energie durch einen oder mehrere Energiewandler 70-73, insbesondere durch den ersten Energiewandler 70, und Zuführen elektrischer Energie durch den ersten DC/DC-Wandler 22, insbesondere an den Anschlusspunkt 54
(ii) Erzeugen elektrischer Energie durch einen oder mehrere Energiewandler 70-73, insbesondere durch den ersten Energiewandler 70 und Entnehmen elektrischer Energie durch den AC/DC-Wandler 42, insbesondere aus dem Entnahmeanschluss 56,
(iii) Zuführen elektrischer Energie durch den ersten DC/DC-Wandler 22, insbesondere an den Anschlusspunkt 54, oder
(iv) Entnehmen elektrischer Energie durch den AC/DC-Wandler 42, insbesondere aus dem Entnahmeanschluss 56.

Der Betrieb des ersten DC/DC-Wandlers 22 kann dabei insbesondere parallel zum Betrieb des ersten Energiewandlers 70 und/oder der Energiewandler 70-73 erfolgen.

Gemäß einer vorteilhaften Ausgestaltung kann die Steuerungs- und/oder Regeleinheit 30 den AC/DC-Wandler 42 und den DC/DC-Wandler 22 mit dem Ziel einer von dem Sensorelement 32 bestimmten elektrischen Nettobilanz von Null steuern und/oder regeln. Ein solcher Betrieb ist vorteilhaft, weil so die von den Verbrauchern 80 genutzte Energie vollständig aus dem Betrieb einer oder mehrere der Energiewandler 70-73 bzw. einer oder mehrerer der DC-Energieerzeugungsnetze 100-102 entnommen wird und keinerlei Energie aus dem Energieversorgungsnetz 200, beispielsweise einem öffentlichen Netz, entnommen werden muss.

Dadurch ist der Betrieb der Verbraucher 80 bezogen auf das oder die Energieerzeugungsnetze 100-102 autark. Auf der anderen Seite wird auch keine Energie an das Energieversorgungsnetz 200 abgegeben, was unter bestimmten Randbedingungen, die von entsprechenden Energieversorgungsverträgen abhängen können, günstig sein kann.

Des Weiteren kann die über die mittels des Sensorelements 32 erfasste elektrische Bilanz erfolgende Steuerung und/oder Regelung des AC/DC-Wandlers 42 durch die Steuerungs- und/oder Regeleinheit 30 dem Energiespeicher 40 Energie aus dem AC-Energieverbrauchsnetz 300 bzw. Energieversorgungsnetz 200 zugeführt werden. In einer vorteilhaften Ausgestaltung der Steuerung und/oder Regelung der Steuerungs- und/oder Regeleinheit 32 wird dabei nur dann Energie aus dem Energieversorgungsnetz 200 und/oder AC-Energieverbrauchsnetz 300 entnommen, wenn die Summe der elektrischen Leistung aus den Energieerzeugungsnetzen 100-102 bzw. Energiewandlern 70-73 die Summe der elektrischen Leistung der Verbraucher 80 im Bilanzkreis übersteigt.

Des Weiteren kann die Steuerungs- und/oder Regeleinheit 30 derart ausgestaltet sein, den ersten DC/DC-Wandler 13 mit dem Ziel eines maximalen Leistungsertrags des ersten DC-Energieerzeugungsnetzes 100 auf der Basis der zur Verfügung stehenden Gleichspannungsleistung am DC-seitigen Eingang des ersten Wechselrichters 13 zu steuern. Eine solche Betriebsweise des Energiemanagementverfahrens, insbesondere der Steuerungs- und/oder Regeleinheit 30, kann vorteilhaft sein, wenn aus dem ersten DC-Energieerzeugungsnetz 100 das zu dem Zeitpunkt unter den gegebenen Randbedingungen, beispielsweise aktuelles Wetter, Zustand der des Netzes, aktuelle Stromkosten, maximal lieferbare Leistung entnommen werden soll. Damit kann möglicherweise ein kostenoptimaler Betrieb des DC-Energieerzeugungsnetzes 100 bzw. der DC-Energieerzeugungsnetze 100-102 realisiert werden.

Insbesondere kann die Steuerungs- und/oder Regeleinheit 30 den AC/DC-Wandler 42 mit dem Ziel eines maximalen Leistungsentzugs aus dem AC-Energieverbrauchsnetz 300 bzw. aus dem Energieversorgungsnetz 200 steuern und/oder regeln. Eine solche Betriebsweise des Energiemanagementsystems kann vorteilhaft sein, wenn in einem Vertrag mit einem Netzbetreiber ein Betrieb der Energiespeicher 40 zur Bereitstellung von Netzdienstleistungen, wie z.B. Regelenergie, vereinbart ist. Damit kann möglicherweise ein kostenoptimaler Betrieb des DC-Energieerzeugungsnetzes 100 bzw. der DC-Energieerzeugungsnetze 100-102 erfolgen.

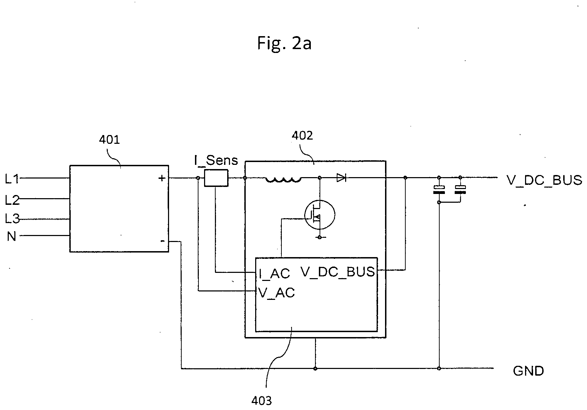

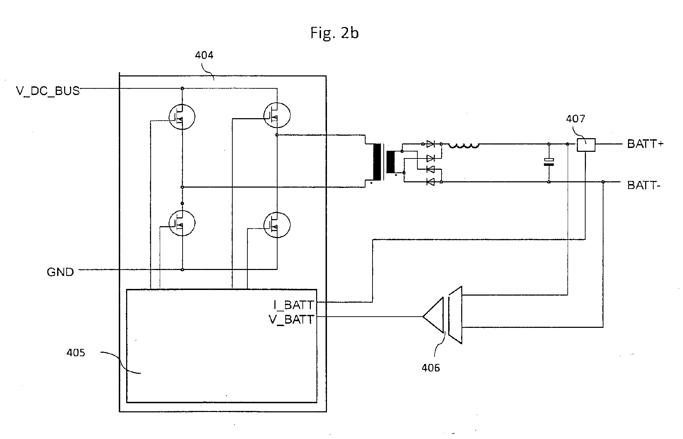

**Figuren 2a** **und** **2b** zeigen eine bevorzugte Ausführungsform des AC/DC-Wandlers 42. Dabei zeigt Figur 2a die Eingangsseite des AC/DC-Wandlers 42, welche mit dem Energieversorgungsnetz 200 oder dem AC-Energieverbrauchsnetz 300 verbindbar ausgestaltet ist und Figur 2b die Ausgangsseite des AC/DC-Wandlers 42 welche über die Anschlüsse BATT+ und BATT- mit einem Energiespeicher 40, zum Beispiel einer Batterie, verbindbar ist.

Eingangsseitig weist der AC/DC-Wandler 42 ein Anschlusselement 401 auf, welches mit dem Energieversorgungsnetz 200 oder dem AC-Energieverbrauchsnetz 300 verbunden werden kann. Insbesondere sind am Eingangselement 401 die Eingänge L1, L2, L3 und N zur Verbindung mit dem Energieversorgungsnetz 200 oder dem AC-Energieverbrauchsnetz 300 ausgebildet. Insbesondere kann der AC/DC-Wandler 42 bzw. das Anschlusselement 401 wahlweise einphasig, über einen Eingang L und den Eingang N, oder dreiphasig, über die Eingänge L1-L3 und den Eingang N, mit dem Energieversorgungsnetz 200 oder dem AC-Energieverbrauchsnetz 300 elektrisch gekoppelt sein.

Das Anschlusselement 401 ist ausgangsseitig mit einem Leistungsfaktorkorrekturfilter 402 verbunden. Der Leistungsfaktorkorrekturfilter 402 ist dazu ausgelegt eine Leistungsanpassung, der an einem Ausgang des Anschlusselements 401 anliegende Wechselspannung durchzuführen. Dazu verfügt der Leistungsfaktorkorrekturfilter 402 über eine zweite Steuerungs- und/oder Regelungseinheit 403, welche die an dem Ausgang des Anschlusselements 402 anliegende Wechselspannung und den Wechselstrom detektiert. Zur Erfassung eines Wechselstroms kann insbesondere ein Detektionselement I_Sens zwischen dem Ausgang des Anschlusselements 401 und einem Eingang des Leistungsfaktorkorrekturfilters 402 vorgesehen sein.

Ausgangsseitig ist der Leistungsfaktorkorrekturfilter 402 mit einer Gleichrichterbrücke 404 (Figur 2b) über den Gleichstrombus V_DC_BUS und GND elektrisch gekoppelt. Die Gleichrichterbrücke 404 ist dazu ausgelegt, den an der Eingangsseite der Gleichstrombrücke 404 anliegenden Wechselstrom in einen Gleichstrom umzuwandeln, wobei der gewandelte Gleichstrom über die Anschlüsse BATT+ und BATT- in den Energiespeicher 40 eingespeist wird.

Zur Steuer- und/oder Regelung des Gleichstromwandlung, kann eine dritte Steuerungs- und/oder Regeleinheit 405 vorgesehen sein. Die dritte Steuerungs-und/oder Regeleinheit 405 ist dazu ausgelegt, die Umwandlung von Wechselstrom in Gleichstrom in Abhängigkeit des Ladezustands des Energiespeichers 40 zu steuern und/oder zu regeln. Hierzu ist vorgesehen, dass die dritte Steuerungs- und/oder Regeleinheit 405 den Strom und die Spannung, welche an dem Energiespeicher 40 anliegen, erfasst. Insbesondere, kann ein Operationsverstärker 406 vorgesehen sein, an dessen Eingängen ein Spannungsniveau des Energiespeichers 40 erfasst wird. Dazu können die Eingänge des Operationsverstärkers 406 jeweils mit dem BATT+ und dem BATT- Anschluss verbunden sein, wobei der Ausgang des Operationsverstärkers 406 mit einem Anschluss V_BATT der dritten Steuerungs-und/oder Regeleinheit 405 zur Erfassung des Spannungsniveaus des Energiespeichers 40 verbunden ist.

Des Weiteren ist vorgesehen, dass das Stromniveau des Energiespeichers 40 direkt am BATT+ Anschluss über ein geeignetes Erfassungselement 407 abgegriffen wird und der dritte Steuerungs- und/oder Regeleinheit 405 über einen Anschluss I_BATT zur Verfügung gestellt wird. Somit ist die dritte Steuerungs- und/oder Regeleinheit 405 in der Lage, die Gleichstromwandlung in Abhängigkeit des Zustands des Energiespeichers zu steuern und/oder zu regeln.

### Bezugszeichenliste

- 1: Energieversorgungssystem
- 10: Energiemanagementeinheit
- 13: erster Wechselrichter
- 14: zweiter Wechselrichter
- 15: dritter Wechselrichter
- 18: AC-seitiger Ausgang Wechselrichter
- 20: Netzanschlusspunkt
- 22: erster DC/DC-Wandler
- 24: Ausgang erster DC/DC-Wandler
- 26: Eingang DC/DC-Wandler
- 28: DC-seitiger Eingang Wechselrichter
- 30: Steuerungs- und/oder Regeleinheit
- 32: Sensorelement
- 34: Kommunikationsleitung
- 35: Kommunikationsleitung
- 40: Energiespeicher
- 42: AC/DC-Wandler
- 44: Eingang AC/DC-Wandler
- 46: Ausgang AC/DC-Wandler
- 52: Sperrelement
- 54: Anschluss
- 56: Entnahmeanschluss
- 58: Verbraucheranschlusspunkt
- 60: Leitung
- 62: Leitung
- 64: Ausgang Energiewandler
- 70: erster Energiewandler
- 71: zweiter Energiewandler
- 72: dritter Energiewandler
- 73: vierter Energiewandler
- 80: Mehrzahl von elektrischen Verbrauchern
- 81: erster elektrischer Verbraucher
- 100: erstes Energieerzeugungsnetz
- 101: zweites Energieerzeugungsnetz
- 102: drittes Energieerzeugungsnetz
- 200: Energieversorgungsnetz
- 300: AC-Energieverbrauchsnetz
- 401: Anschlusselement
- 402: Leistungsfaktorkorrekturfilter
- 403: zweite Steuerungs- und/oder Regelungseinheit
- 404: Gleichrichterbrücke
- 405: dritte Steuerungs- und/oder Regeleinheit
- 406: Operationsverstärker
- 407: Erfassungselement

## Patentansprüche

1. Energiemanagementeinheit (10) zur Steuerung und/oder Regelung einer Energiebereitstellung in einem AC-Energieverbrauchsnetz (300) unter Zuhilfenahme eines Energiespeichers (40) in Abhängigkeit eines Energiebedarfszustands des AC-Energieverbrauchsnetzes (300), wobei das AC-Energieverbrauchsnetz (300) über einen Wechselrichter (13) mit einem ein Photovoltaik-Modul (70) aufweisenden DC-Energieerzeugungsnetz (100) verbundenen ist und der Wechselrichter (13) ein Maximum Power Point Tracking, MPPT, Regelungs- und/oder Steuerungsverfahren nutzt, umfassend:
- einen DC/DC-Wandler (22) zum Zuführen einer aus dem Energiespeicher (40) entnommenen Energie zu dem DC-Energieerzeugungsnetz (100), wobei der DC/DC-Wandler (22) an einem zwischen dem Photovoltaik-Modul (70) und dem Wechselrichter (13) angeordnetem Anschluss (54) eingekoppelt ist;
- einen AC/DC-Wandler (42) zum Speichern von einer aus dem AC-Energieverbrauchsnetz (300) entnommenen Energie in dem Energiespeicher (40); und
- eine Steuerungs- und/oder Regeleinheit (30), welche dazu ausgelegt ist:
- den Energiebedarfszustand des AC-Energieverbrauchsnetzes (300) zu ermitteln; und
- den DC/DC-Wandler (22) und den AC/DC-Wandler (42) in Abhängigkeit des ermittelten Energiebedarfszustands zu steuern und/oder zu regeln; und
wobei der DC/DC-Wandler (22) dazu ausgebildet ist, eine Strom/Spannungscharakteristik des Photovoltaik-Moduls (70) aufzuweisen,
wobei der DC/DC-Wandler (22) in Bezug auf eine Zielleistungszufuhr nach dem Zusammenhang von transportiertem Strom als Funktion der Spannung gemäß einer Strom/Spannungscharakteristik eines Photovoltaik-Moduls (70) ausgebildet ist.

2. Energiemanagementeinheit (10) gemäß einem der vorhergehenden Ansprüche, weiter umfassend ein Sensorelement (32), welches dazu ausgelegt ist, den Energiebedarfszustand zu erfassen.

3. Energieversorgungssystem (1) umfassend:
- zumindest ein erstes DC-Energieerzeugungsnetz (100), welches ein Photovoltaik-Modul (70) aufweist;
- ein über einen Wechselrichter (13) mit dem ersten DC-Energieerzeugungsnetz (100) elektrisch gekoppeltes AC-Energieverbrauchsnetz (300); und
- eine Energiemanagementeinheit (10) nach Anspruch 1.

4. Energieversorgungssystem (1) gemäß Anspruch 3, wobei das Photovoltaik-Modul (70) mit dem Wechselrichter (13) elektrisch verbunden ist.

5. Energieversorgungssystem (1) gemäß Anspruch 3, wobei das DC-Energieerzeugungsnetz (100) ein Sperrelement (52) aufweist, welches zwischen dem Photovoltaik-Modul (70) und dem Anschluss (54) angeordnet ist.

6. Energieversorgungssystem (1) gemäß einem der Ansprüche 3-5, weiter umfassend ein Sensorelement (32), welches dazu ausgelegt ist, den Energiebedarfszustand des AC-Energieverbrauchsnetzes (300) zu erfassen.

7. Energieversorgungssystem (1) gemäß Anspruch 6, wobei das Sensorelement (32) dazu ausgelegt ist, einen Strom und/oder eine Spannung und/oder eine Frequenz einer elektrischen Leistung im AC-Energieverbrauchsnetz (300) zu erfassen.

8. Energieversorgungssystem (1) gemäß einem der Ansprüche 3-7, weiter umfassend:
- ein zweites DC-Energieerzeugungsnetz (101), wobei die Energiemanagementeinheit (10) optional weiter umfasst:
- einen zweiten DC/DC-Wandler zum Zuführen einer aus dem Energiespeicher (40) entnommenen Energie zu dem zweiten DC-Energieerzeugungsnetz (101), und wobei die Steuerungs- und/oder Regeleinheit (30) dazu ausgelegt ist, den zweiten DC/DC-Wandler in Abhängigkeit des ermittelten Energiebedarfszustands zu steuern und/oder zu regeln.

9. Energieversorgungssystem (1) gemäß einem der Ansprüche 3-8, wobei das Energiemanagementsystem den Energiespeicher (40) umfasst und der Energiespeicher (40) insbesondere als ein wiederaufladbares Batteriesystem und/oder als eine Kondensatoreinheit und/oder als ein Schwungradspeicher ausgebildet ist.

10. Energiemanagementverfahren zur Steuerung und/oder Regelung einer Energiebereitstellung in einem AC-Energieverbrauchsnetz (300) unter Zuhilfenahme eines Energiespeichers (40) in Abhängigkeit eines Energiebedarfszustands des AC-Energieverbrauchsnetzes (300),
wobei das AC-Energieverbrauchsnetz (300) über einen Wechselrichter (13) mit einem ein Photovoltaik-Modul (70) aufweisenden DC-Energieerzeugungsnetz (100) verbundenen ist und der Wechselrichter (13) ein Maximum Power Point Tracking, MPPT, Regelungs- und/oder Steuerungsverfahren nutzt,
wobei ein DC/DC-Wandler (22) zum Zuführen einer aus dem Energiespeicher (40) entnommenen Energie zu dem DC-Energieerzeugungsnetz (100) vorgesehen ist,
wobei der DC/DC-Wandler (22) an einem zwischen dem Photovoltaik-Modul (70) und dem Wechselrichter (13) angeordnetem Anschluss (54) eingekoppelt ist; wobei das Verfahren umfasst:
- Ermitteln eines Energiebedarfszustands in dem AC-Energieverbrauchsnetz (300);
- in Abhängigkeit des ermittelten Energiebedarfszustands:
- Entnehmen einer in einem Energiespeicher (40) gespeicherten elektrischen Energie zur Zuführung der elektrischen Energie in das DC-Energieerzeugungsnetz (100) mittels des DC/DC Wandlers (22),
wobei der DC/DC-Wandler (22) dazu ausgebildet ist, eine Strom/Spannungscharakteristik des Photovoltaik-Moduls (70) aufzuweisen,
wobei der DC/DC-Wandler (22) in Bezug auf eine Zielleistungszufuhr nach dem Zusammenhang von transportiertem Strom als Funktion der Spannung gemäß einer Strom/Spannungscharakteristik eines Photovoltaik-Moduls (70) ausgebildet ist.

## Claims

1. An energy management unit (10) for controlling and/or regulating an energy provision in an AC energy consumption grid (300) with the aid of an energy storage (40) depending on an energy demand state of the AC energy consumption grid (300), wherein the AC energy consumption grid (300) is connected to a DC energy generation grid (100) having a photovoltaic module (70) via an inverter (13), and the inverter (13) uses a maximum power point tracking, MPPT, regulation and/or control method, comprising:
- a DC/DC converter (22) for supplying energy drawn from the energy storage (40) to the DC energy generation grid (100), wherein the DC/DC converter (22) is coupled in at a terminal (54) arranged between the photovoltaic module (70) and the inverter (13);
- an AC/DC converter (42) for storing energy drawn from the AC energy consumption grid (300) in the energy storage (40); and
- a control and/or regulation unit (30) configured to:
- determine the energy demand status of the AC energy consumption grid (300); and
- control and/or regulate the DC/DC converter (22) and the AC/DC converter (42) depending on the determined energy demand state; and
wherein the DC/DC converter (22) is designed to have a current/voltage characteristic of the photovoltaic module (70),
wherein the DC/DC converter (22) is designed in relation to a target power supply according to the relationship of transported current as a function of the voltage according to a current/voltage characteristic of a photovoltaic module (70).

2. The energy management unit (10) according to one of the preceding claims, further comprising a sensor element (32) configured to detect the energy demand state.

3. An energy supply system (1) comprising:
- at least one first DC power generation grid (100) having a photovoltaic module (70);
- an AC power consumption grid (300) electrically coupled to the first DC power generation grid (100) via an inverter (13); and
- an energy management unit (10) according to claim 1.

4. The energy supply system (1) according to claim 3, wherein the photovoltaic module (70) is electrically connected to the inverter (13).

5. The energy supply system (1) according to claim 3, wherein the DC energy generation grid (100) has a blocking element (52) arranged between the photovoltaic module (70) and the terminal (54).

6. The energy supply system (1) according to one of claims 3-5, further comprising a sensor element (32) configured to detect the energy demand state of the AC energy consumption grid (300).

7. The energy supply system (1) according to claim 6, wherein the sensor element (32) is configured to detect a current and/or a voltage and/or a frequency of an electrical power in the AC energy consumption grid (300).

8. The energy supply system (1) according to one of claims 3-7, further comprising:
- a second DC power generation grid (101), wherein the energy management unit (10) optionally further comprises:
- a second DC/DC converter for supplying energy drawn from the energy storage (40) to the second DC energy generation grid (101), and wherein the control and/or regulation unit (30) is configured to control and/or regulate the second DC/DC converter depending on the determined energy demand state.

9. The energy supply system (1) according to one of claims 3-8, wherein the energy management system comprises the energy storage (40), and the energy storage (40) is designed in particular as a rechargeable battery system and/or as a capacitor unit and/or as a flywheel storage.

10. An energy management method for controlling and/or regulating an energy provision in an AC energy consumption grid (300) with the aid of an energy storage (40) depending on an energy demand state of the AC energy consumption grid (300),
wherein the AC energy consumption grid (300) is connected to a DC energy generation grid (100) having a photovoltaic module (70) via an inverter (13), and the inverter (13) uses a maximum power point tracking, MPPT, regulation and/or control method,
wherein there is provided a DC/DC converter (22) for supplying energy drawn from the energy storage (40) to the DC energy generation grid (100),
wherein the DC/DC converter (22) is coupled in at a terminal (54) arranged between the photovoltaic module (70) and the inverter (13); the method comprising:
- determining an energy demand state in the AC energy consumption grid (300);
- depending on the determined energy demand state:
- drawing electrical energy stored in an energy storage (40) for supplying electrical energy to the DC energy generation grid (100) by means of the DC/DC converter (22),
wherein the DC/DC converter (22) is designed to have a current/voltage characteristic of the photovoltaic module (70),
wherein the DC/DC converter (22) is designed in relation to a target power supply according to the relationship of transported current as a function of the voltage according to a current/voltage characteristic of a photovoltaic module (70).

## Revendications

1. Unité de gestion d'énergie (10) pour la commande et/ou régulation d'une mise à disposition d'énergie dans un réseau de consommation d'énergie CA (300) à l'aide d'un accumulateur d'énergie (40) en fonction d'un état de besoin en énergie du réseau de consommation d'énergie CA (300), dans laquelle le réseau de consommation d'énergie CA (300) est connecté à un réseau de production d'énergie CC (100) présentant un module photovoltaïque (70) par le biais d'un onduleur (13) et l'onduleur (13) utilise un procédé de régulation et/ou de commande à conversion optimale d'énergie, MPPT (Maximum Power Point Tracking), comprenant :
- un convertisseur CC/CC (22) pour l'acheminement d'une énergie prélevée de l'accumulateur d'énergie (40) vers le réseau de production d'énergie CC (100), dans laquelle le convertisseur CC/CC (22) est couplé à un raccord (54) disposé entre le module photovoltaïque (70) et l'onduleur (13) ;
- un convertisseur CA/CC (42) pour le stockage d'une énergie prélevée du réseau de consommation d'énergie CA (300) dans l'accumulateur d'énergie (40) ; et
- une unité de commande et/ou de régulation (30) qui est conçue pour :
- déterminer l'état de besoin en énergie du réseau de consommation d'énergie CA (300) ; et
- commander et/ou réguler le convertisseur CC/CC (22) et le convertisseur CA/CC (42) en fonction de l'état de besoin en énergie déterminé ; et
dans laquelle le convertisseur CC/CC (22) est réalisé pour présenter une caractéristique de courant/tension du module photovoltaïque (70),
dans laquelle le convertisseur CC/CC (22) est réalisé par rapport à un acheminement de puissance cible selon la corrélation du courant transporté en tant que fonction de la tension conformément à une caractéristique de courant/tension d'un module photovoltaïque (70).

2. Unité de gestion d'énergie (10) selon une des revendications précédentes, comprenant en outre un élément de capteur (32) qui est conçu pour détecter l'état de besoin en énergie.

3. Système d'alimentation en énergie (1) comprenant :
- au moins un premier réseau de production d'énergie CC (100) qui présente un module photovoltaïque (70) ;
- un réseau de consommation d'énergie CA (300) couplé électriquement au premier réseau de production d'énergie CC (100) par le biais d'un onduleur (13) ; et
une unité de gestion d'énergie (10) selon la revendication 1.

4. Système d'alimentation en énergie (1) selon la revendication 3, dans lequel le module photovoltaïque (70) est connecté électriquement à l'onduleur (13).

5. Système d'alimentation en énergie (1) selon la revendication 3, dans lequel le réseau de production d'énergie CC (100) présente un élément de blocage (52) qui est disposé entre le module photovoltaïque (70) et le raccord (54).

6. Système d'alimentation en énergie (1) selon une des revendications 3 à 5, comprenant en outre un élément de capteur (32) qui est conçu pour détecter l'état de besoin en énergie du réseau de consommation d'énergie CA (300).

7. Système d'alimentation en énergie (1) selon la revendication 6, dans lequel l'élément de capteur (32) est conçu pour détecter un courant et/ou une tension et/ou une fréquence d'une puissance électrique dans le réseau de consommation d'énergie CA (300).

8. Système d'alimentation en énergie (1) selon une des revendications 3 à 7, comprenant en outre :
- un second réseau de production d'énergie CC (101), dans lequel l'unité de gestion d'énergie (10) comprend en outre en option :
- un second convertisseur CC/CC pour l'acheminement d'une énergie prélevée de l'accumulateur d'énergie (40) vers le second réseau de production d'énergie CC (101), et dans lequel l'unité de commande et/ou de régulation (30) est conçue pour commander et/ou réguler le second convertisseur CC/CC en fonction de l'état de besoin en énergie déterminé.

9. Système d'alimentation en énergie (1) selon une des revendications 3 à 8, dans lequel le système de gestion d'énergie comprend l'accumulateur d'énergie (40) et l'accumulateur d'énergie (40) est notamment réalisé en tant que système de batterie rechargeable et/ou en tant qu'unité de condensateur et/ou en tant qu'accumulateur à volant d'inertie.

10. Procédé de gestion d'énergie pour la commande et/ou régulation d'une mise à disposition d'énergie dans un réseau de consommation d'énergie CA (300) à l'aide d'un accumulateur d'énergie (40) en fonction d'un état de besoin en énergie du réseau de consommation d'énergie CA (300),
dans lequel le réseau de consommation d'énergie CA (300) est connecté à un réseau de production d'énergie CC (100) présentant un module photovoltaïque (70) par le biais d'un onduleur (13) et l'onduleur (13) utilise un procédé de régulation et/ou de commande à conversion optimale d'énergie, MPPT (Maximum Power Point Tracking),
dans lequel un convertisseur CC/CC (22) pour l'acheminement d'une énergie prélevée de l'accumulateur d'énergie (40) vers le réseau de production d'énergie CC (100) est prévu,
dans lequel le convertisseur CC/CC (22) est couplé à un raccord (54) disposé entre le module photovoltaïque (70) et l'onduleur (13) ; dans lequel le procédé comprend :
- détermination d'un état de besoin en énergie dans le réseau de consommation d'énergie CA (300) ;
- en fonction de l'état de besoin en énergie déterminé :
- prélèvement d'une énergie électrique stockée dans un accumulateur d'énergie (40) pour l'acheminement de l'énergie électrique dans le réseau de production d'énergie CC (100) au moyen du convertisseur CC/CC (22),
dans lequel le convertisseur CC/CC (22) est réalisé pour présenter une caractéristique de courant/tension du module photovoltaïque (70),
dans lequel le convertisseur CC/CC (22) est réalisé par rapport à un acheminement de puissance cible selon la corrélation du courant transporté en tant que fonction de la tension conformément à une caractéristique de courant/tension d'un module photovoltaïque (70).
